# FASCICULE DE BREVET EUROPEEN

(11) **EP 0 474 521 B1**
(45) Date de publication et mention de la délivrance du brevet: **29.05.1996**
(21) Numéro de dépôt: 91402003.7
(22) Date de dépôt: 17.07.1991
(51) Int. Cl.: G01N 27/90

(54) **Dispositif pour l'examen non destructif d'une pluralité de tronçons de jonctions**
Gerät zur zerstörungsfreien Untersuchung einer Mehrzahl von Teilstücken von Verbindungen
Device for the nondestructive examination of a plurality of junction parts

(30) Priorité: 06.09.1990 FR 9011074
(43) Date de publication de la demande: 11.03.1992
(73) Titulaire: AEROSPATIALE Société Nationale Industrielle, F-75781 Paris Cédex 16 (FR)
(72) Inventeur: Floret, Michel, F-92230 Gennevilliers (FR)
(74) Mandataire: Bonnetat, Christian

(56) Documents cités:
- EP-A- 0 117 787
- GB-A- 2 192 993
- US-A- 4 942 545
- MAGNETIC AND ELECTROMAGNETIC METHODS, vol. 16, no. 10, octobre 1980, pp. 737-741; V.V. KLYUEV et al.: "Standard-free adjustment and automatic recognition for ferroprobe apparatus"
- PATENT ABSTRACTS OF JAPAN vol. 9, no. 109 (P-355)[1832], 14 mai 1985 & JP-A-59 231 448

## Description

La présente invention concerne un dispositif, notamment portable, pour l'examen non destructif d'une surface le long d'une ligne. Quoique ce dispositif puisse être utilisé dans de nombreuses applications telles que l'examen non destructif de soudures de tubes, de canalisations, etc ..., la présente invention sera plus spécialement décrite ci-après en rapport avec l'examen non destructif des jonctions des panneaux constituant la peau du fuselage d'un aéronef.

On sait que la peau du fuselage d'un aéronef est constituée de panneaux individuels rivetés et que les bords de deux panneaux adjacents se chevauchent de façon étanche et sont assemblés au moyen de rivets ou analogues. De telles jonctions par rivets fatiguent beaucoup au cours de l'utilisation de l'aéronef, notamment du fait des cycles de compression et de décompression auxquels est soumis le fuselage de celui-ci. Il peut en résulter la formation de criques se développant à partir des trous de passage des rivets dans les panneaux et le décollement des bords de la jonction. Par suite, les jonctions s'affaiblissent et peuvent subir l'attaque de la corrosion. Il est donc indispensable de surveiller périodiquement lesdites jonctions afin de connaître leur état en ce qui concerne le développement des criques, le décollement de bords et la progression de la corrosion.

Par le brevet français FR-A-2 541 773, on connaît déjà un dispositif pour l'examen non destructif d'une pluralité de tronçons de jonctions rivetées ou analogues, chacun desdits tronçons étant individuellement identifiable grâce à des moyens d'identification, ledit dispositif comportant :
- une sonde de détection de type électrique, déplaçable le long desdits tronçons de jonctions ;
- des moyens de commande de ladite sonde ;
- des moyens d'enregistrement des résultats des examens desdits tronçons par ladite sonde ; et
- des moyens à microprocesseur pour la gestion des examens desdits tronçons par ladite sonde; et
- des moyens de visualisation associés auxdits moyens à microprocesseur.

Lors de la mise en oeuvre d'un tel dispositif, on règle lesdits moyens de commande pour que l'examen de la sonde soit optimal. Toutefois, notamment en ce qui concerne les avions, les tronçons de jonctions examinés peuvent présenter des constitutions différentes et il est nécessaire, pour que les résultats de l'examen soient satisfaisants, d'adapter le réglage de la sonde à chaque tronçon de jonction examiné en fonction de sa constitution. Or, il peut être difficile, sinon impossible à un opérateur disposé à l'extérieur de l'avion, de déterminer le type de la jonction qu'il doit examiner et donc de régler au mieux le fonctionnement de ladite sonde.

La présente invention a pour objet de remédier à cet inconvénient.

A cette fin, selon l'invention, le dispositif du type rappelé ci-dessus est remarquable en ce qu'il comprend, de plus :
- une pluralité de sondes, différentes mais interchangeables ;
- des premiers moyens à mémoire contenant, pour chaque tronçon de jonction, sa constitution spécifique ; et
- des seconds moyens à mémoire contenant, pour chaque constitution spécifique de tronçon de jonction, l'information indiquant celle desdites sondes qui est la plus appropriée à l'examen de cette constitution spécifique et l'information indiquant le réglage de fonctionnement à appliquer à ladite sonde,
- lesdits moyens à microprocesseur exploitant le contenu desdits premiers et seconds moyens à mémoire pour afficher sur lesdits moyens de visualisation ladite sonde la plus approprié et pour contrôler lesdits moyens de réglage qui appliquent à ladite sonde la plus appropriée le réglage correspondant à la constitution spécifique du tronçon de jonction en cours d'examen.

Ainsi, dès l'identification d'un tronçon de jonction à examiner, la sonde peut être réglée automatiquement, de façon optimale, sans intervention de l'opérateur.

Lesdits premiers et seconds moyens à mémoire peuvent être indépendants. Toutefois, ils peuvent également être fusionnés en une seule mémoire contenant ainsi, pour chaque tronçon de jonction, le réglage de fonctionnement à appliquer à ladite sonde.

De préférence, le contenu desdits seconds moyens à mémoire résulte d'une pluralité d'examens préalables faits avec des réglages différents de ladite sonde sur des échantillons connus de constitutions semblables à celles desdits tronçons de jonctions.

Selon un mode de réalisation du dispositif conforme à la présente invention, permettant d'étendre l'usage dudit dispositif à des jonctions de constitutions très différentes, on prévoit plusieurs sondes interchangeables et des moyens de visualisation associés auxdits moyens à microprocesseur, et lesdits seconds moyens à mémoire contiennent de plus, pour chaque constitution spécifique de tronçon de jonction, l'information indiquant celle desdites sondes qui est la plus appropriée à l'examen de cette constitution spécifique et lesdits moyens à microprocesseur affichent cette information sur lesdits moyens de visualisation.

Ainsi, l'opérateur peut choisir la sonde la plus appropriée à l'examen du tronçon de jonction en cours, le réglage de cette sonde étant ensuite assuré automatiquement par lesdits moyens de commande, de la façon décrite ci-dessus.

De préférence, le dispositif selon l'invention comporte, d'une part un boîtier de contrôle proche de ladite sonde, incorporant lesdits moyens de commande, ainsi que les moyens de lecture de ladite sonde et lesdits moyens à microprocesseur et, d'autre part, une pluralité d'appareils périphériques, comprenant lesdits premiers et seconds moyens à mémoire et au moins une unité de mémorisation et destinés à être placés à poste fixe à quelque distance des tronçons de jonction examinés.

Comme cela a été décrit dans le brevet français FR-A-2 541 772, ladite sonde peut être du type à courants de Foucault. Dans ce cas, pour ajuster le fonctionnement de la ou des sondes, lesdits moyens de réglage comportent, pour alimenter celle(s)-ci, un générateur de fréquence porteuse réglable.

Les figures du dessin annexé feront bien comprendre comment l'invention peut être réalisée. Sur ces figures, des références identiques désignent des éléments semblables.

La figure 1 illustre schématiquement une partie du dispositif selon l'invention, examinant un tronçon de jonction rivetée.

La figure 2 est une vue de face, à plus grande échelle, illustrant des raccords entre les panneaux individuels de la peau d'un fuselage d'aéronef.

Les figures 3a à 3e sont des coupes suivant la ligne III-III de la figure 2, illustrant plusieurs constitutions possibles pour les jonctions entre lesdits panneaux.

La figure 4 est une vue de face agrandie montrant le porte-sonde et son montage sur la tige de guidage du dispositif.

La figure 5 est une vue de côté correspondant à la figure 4.

La figure 6 est le schéma synoptique du dispositif conforme à la présente invention.

La figure 7 illustre, schématiquement en perspective, la structure d'un mode de réalisation d'une sonde pour le dispositif de l'invention.

La figure 8 montre le schéma synoptique des moyens de réglage et de lecture de la sonde de la figure 7.

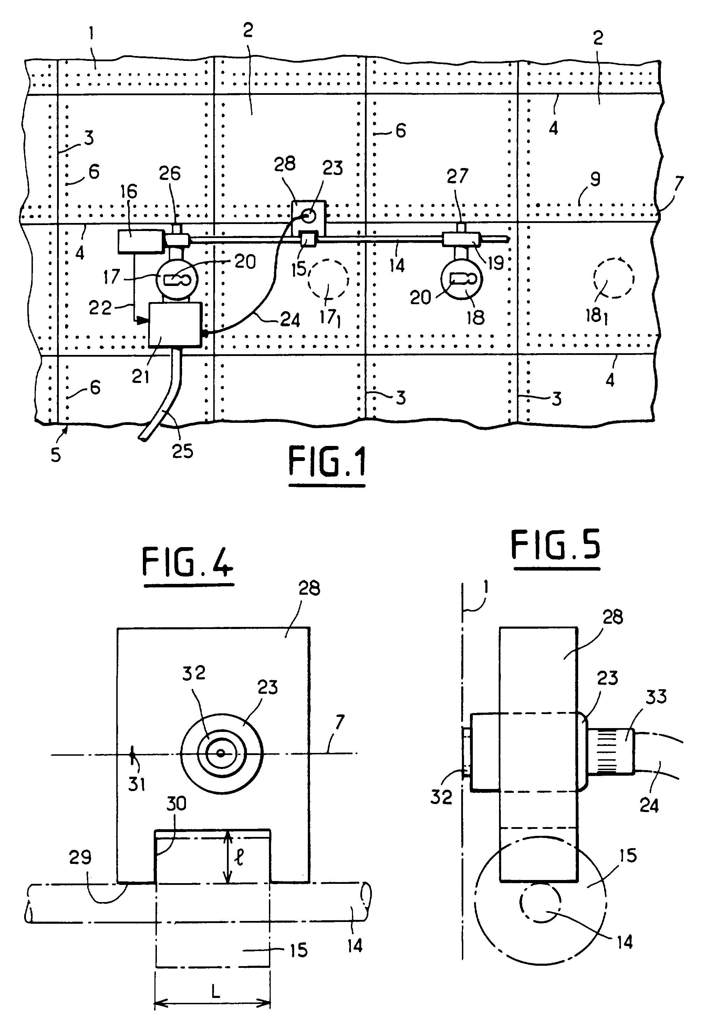

La portion 1 de peau de fuselage pour aéronef, montrée schématiquement par la figure 1, est constituée, comme cela est usuel, de panneaux individuels rectangulaires 2 en aluminium assemblés les uns aux autres et définissant des lignes de jonctions transversales 3 et des lignes de jonctions longitudinales 4.

Les lignes de jonctions transversales 3 correspondent à l'emplacement des cadres du fuselage (non représentés) et on prévoit des lignes transversales 5 de rivets 6 (par exemple en titane) pour assembler les bords transversaux des panneaux 2 auxdits cadres.

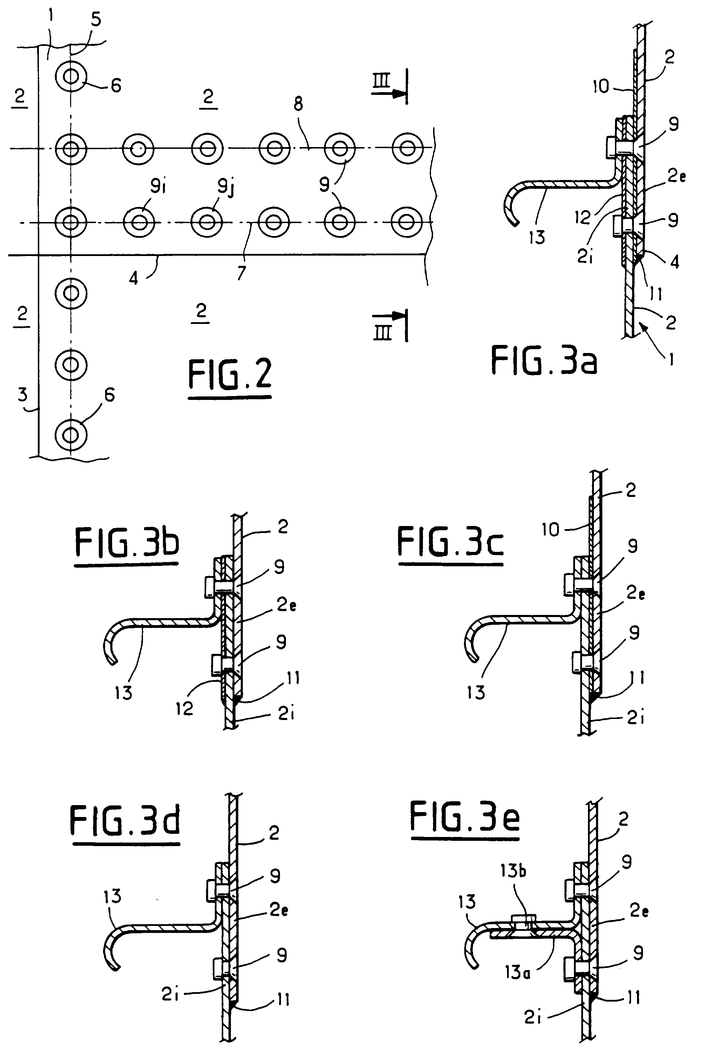

Comme le montrent bien les figures 2 et 3a à 3e, les lignes de jonctions longitudinales 4 sont du type à recouvrement et les bords 2e et 2i de deux panneaux 2 adjacents se chevauchent et sont assemblés au moyen de deux lignes parallèles 7 et 8 de rivets 9 (en titane). Dans le mode de réalisation de la figure 3a, ces bords chevauchants 2e et 2i pressent entre eux une bande de renfort 10 et un joint d'étanchéité 11 est disposé entre l'extrémité (formant la ligne de jonction apparente 4) du bord extérieur 2e et la paroi extérieure du bord intérieur 2i. Des bandes et profilés de renfort 12 et 13 sont prévus du côté intérieur de la peau 1 du fuselage et sont solidarisés de celle-ci par les lignes 7 et 8 des rivets 9.

Les figures 3b à 3e montrent, en coupe, des variantes de constitution de la jonction entre deux panneaux adjacents. Dans la réalisation de la figure 3b, la bande de renfort 10 a été supprimée, alors que sur la figure 3c, c'est le profilé de renfort 12 qui a été éliminé. La réalisation de la figure 3d ne comporte ni bande de renfort 10 ni profilé de renfort 12. Enfin, sur la figure 3e, la constitution entre la jonction est semblable à celle de la figure 3d, mais le profilé de renfort 13 est associé à une cornière de renfort supplémentaire 13a, dont une aile est fixée aux panneaux grâce aux rivets 9 de la ligne 7 et l'autre au renfort 13, par l'intermédiaire de rivets 13b.

Sur la figure 1, on a représenté schématiquement et partiellement le dispositif conforme à la présente invention, en cours de vérification de la ligne longitudinale 7 de rivets 9 d'un panneau de peau 2. Ce dispositif comporte une tige de guidage 14, dont la longueur correspond à celle d'au moins un panneau ou à celle de quelques panneaux 2, par exemple à la longueur de deux ou trois panneaux 2, et sur laquelle peut coulisser un curseur 15. Il comporte de plus, à une de ses extrémités, un boîtier de mesure 16, susceptible d'indiquer, à chaque instant, la position du curseur 15 le long de la tige 14. Par exemple, l'ensemble 14-15-16 est du type décrit dans le brevet US-A-3 898 555.

A cet ensemble 14-15-16 sont associées deux ventouses 17 et 18, de type connu, actionnables par un levier manuel 20. La ventouse 17 est rigidement liée au boîtier de mesure 16, tandis que la ventouse 18 est solidaire d'un coulisseau 19, pouvant glisser le long de la tige de guidage 14.

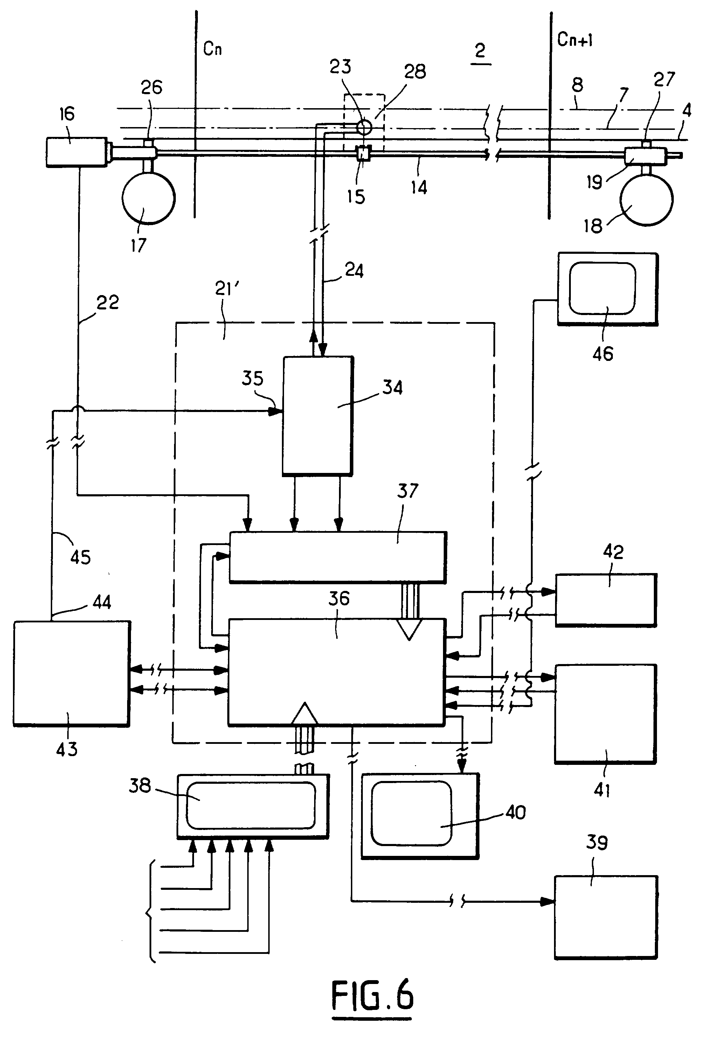

Le dispositif selon l'invention comporte de plus un boîtier de contrôle 21, solidaire de la ventouse 17 et recevant les mesures du boîtier 16, par la liaison 22 et les indications d'une sonde 23, par la liaison 24. Le boîtier 21 est relié par une liaison 25 à une pluralité d'appareils périphériques, comme cela est montré par la figure 6, sur laquelle une variante de réalisation 21' plus complète du boîtier 21 est représentée séparée de la ventouse 17.

Il va de soi, par ailleurs, qu'une partie des éléments du boîtier 21′ pourrait être solidaire de l'ensemble 14-15-16 (comme le boîtier 21), le reste en étant séparé et y étant relié par la liaison 25 (comme le boîtier 21′).

Des doigts 26 et 27, respectivement solidaires du boîtier 16 et du coulisseau 19, peuvent coopérer avec l'extrémité du bord extérieur 2e et/ou avec le joint 11 pour disposer la tige de guidage 14 parallèlement à la ligne de jonction 4, et donc à la ligne 7 de rivets 9, à examiner.

La sonde 23 est portée par un porte-sonde 28. Celui-ci est avantageusement constitué par une plaque épaisse transparente, par exemple en un composé méthacrylique, dans laquelle est incorporée ladite sonde. Dans un de ses bords 29, le porte-sonde 28 comporte une échancrure 30, dont la longueur L est telle qu'elle peut s'emboîter à frottement doux sur le curseur 15 et dont la profondeur l est telle que, lorsqu'elle est emboîtée sur le curseur 15, le bord 29 soit en appui sur la tige de guidage 14, la sonde 23 étant alors centrée sur la ligne 7 des rivets 9.

Le porte-sonde 28 comporte de plus un réticule 31 centré sur le rivet 9i de la ligne 7 lorsque la sonde 23 est centrée sur le rivet 9j de la ligne 7.

En direction de la peau 1 du fuselage, la sonde 23 est pourvue d'un patin d'appui et de glissement 32, alors que du côté opposé, elle comporte une douille 33 de raccord à la liaison 24.

On voit ainsi que, grâce à l'emboîtement du porte-sonde 28 sur le curseur 15 et à la douille de raccord 33, l'ensemble sonde 23 - porte-sonde 28 peut être facilement monté ou démonté. Aussi, au dispositif conforme à l'invention, sont associés une pluralité d'ensembles sonde 23 - porte-sonde 28, géométriquement identiques, mais dans lesquels les sondes 23 ont des performances électriques différentes. Ainsi, en fonction des caractéristiques exigées de la sonde par l'examen à effectuer, on choisit l'un ou l'autre desdits ensembles interchangeables 23-28.

Comme le montre la figure 6, le boîtier de contrôle 21′ comporte les moyens de commande et de lecture 34, pour la sonde 23, reliés à celle-ci par la liaison 24. Ces moyens de commande et de lecture sont pourvus d'une entrée de commande 35. De plus, le boîtier de contrôle 21′ comporte un microprocesseur 36, en liaison avec les sorties desdits moyens de commande et de lecture 34, par l'intermédiaire d'un convertisseur analogique-numérique 37. Ce dernier peut convertir également les informations provenant du boîtier de mesure 16, pour les adresser sous la forme convenable au microprocesseur 36.

Le microprocesseur 36 est par ailleurs en liaison avec un clavier 38, une imprimante 39, un dispositif de visualisation 40, une unité de stockage 41, par exemple du type disque dur, une disquette de programmation 42 et un autre dispositif de visualisation 46 à proximité de l'opérateur assurant le déplacement de la sonde.

De plus, le dispositif comporte, conformément à la présente invention, une mémoire 43 contenant les réglages que les moyens de commande et de lecture 34 doivent appliquer à la sonde 23, en fonction de la constitution particulière (voir les figures 3a à 3e) de la jonction à examiner. Les informations emmagasinées dans la mémoire 43 sont obtenues par apprentissage, c'est-à-dire en examinant, dans une phase préparatoire, des échantillons connus de chacune des constitutions différentes de jonction avec des réglages différents de plusieurs desdites sondes 23, puis en stockant dans ladite mémoire 43 l'identification de la sonde 23 et les paramètres de réglage de cette dernière qui conviennent le mieux à chaque type de constitution. Ainsi, la sortie 44 de la mémoire 43 est reliée à l'entrée 35 desdits moyens de commande et de lecture 34 par une liaison 45. Bien entendu, la mémoire 43 est en liaison avec le microprocesseur 36.

Comme mentionné ci-dessus, même lorsque le boîtier de contrôle 21 est solidaire de l'ensemble comprenant les éléments 14 à 20 et 22 à 28, à cause du faible poids dudit boîtier, l'ensemble des éléments 14 à 28 est portable et peut être à la disposition d'un premier opérateur se déplaçant, d'une manière ou d'une autre, par rapport à la peau 1 du fuselage, au voisinage de celle-ci. Le dispositif de visualisation 43, qui peut être également portable et de petite dimension, est également à la disposition de ce premier opérateur. En revanche, tous les autres appareils périphériques 38 à 43 peuvent être disposés loin du lieu où l'on effectue la vérification des liaisons rivetées et ils sont par exemple placés au sol, à la disposition d'un second opérateur. Les différentes connexions entre le boîtier de contrôle 21' et les appareils périphériques 38 à 43 sont rassemblés dans la liaison 25 montrée par la figure 1.

Pour effectuer une vérification systématique de toutes les liaisons longitudinales 4 (par exemple) d'un avion, on commence par attribuer un numéro à chaque tronçon de l'avion, à chaque cadre du fuselage (correspondant aux jonctions 3) et à chaque jonction 4.

Le premier opérateur, qui se trouve à proximité d'une portion de jonction 4 à vérifier, disposée entre les cadres Cₙ et Cₙ₊₁ et qui porte l'ensemble des éléments 14 à 28 et le dispositif de visualisation 46, fixe les ventouses 17 et 18 sur la peau 1 de façon que celles-ci soient situées de part et d'autre desdits cadres et que les doigts 26 et 27 prennent appui contre le joint 11. Il est alors sûr que la tige 14 est parallèle à cette portion de jonction 4 et que la sonde 23 se trouve en regard de la ligne 7. Pendant ce temps, le second opérateur entre, par le clavier 38, différentes informations, telles que le numéro de l'avion, le numéro du tronçon de fuselage, les numéros des cadres limitant la portion de jonction 4, le numéro de la jonction 4, le côté (gauche ou droit) du fuselage, etc ... propres à permettre l'identification de chaque tronçon de jonction.

A partir de ces informations d'identification, le microprocesseur 36 connaît donc, par la mémoire 43, la constitution exacte particulière d'un tronçon de jonction 4 à examiner. Il peut donc afficher sur les dispositifs de visualisation 40 et 46 la sonde 23 qui convient le mieux à l'examen. L'opérateur peut donc choisir l'ensemble 23-28 parmi la pluralité d'ensembles 23-28 interchangeables et le mettre en place sur le curseur 15 en le reliant à la liaison 24 grâce au raccord 23. Ensuite, le microprocesseur 36 peut commander en conséquence la mémoire 43 pour que celle-ci adresse à la sonde 23 choisie, par l'intermédiaire des moyens 34, les réglages spécifiques au tronçon de jonction 4 que ladite sonde va examiner.

Le premier opérateur commence par déplacer l'ensemble curseur 15 - porte-sonde 28 vers l'une des extrémités du tronçon de jonction 4 à contrôler et, à l'aide du réticule 31, il vise le centre d'un rivet d'extrémité 9 de façon que la sonde 23 se trouve superposée au premier des rivets 9 de la ligne 7 dudit tronçon. Puis, il effectue la même opération à l'autre extrémité de celui-ci. Par suite, le microprocesseur 36 reçoit du boîtier de mesure 16, les abscisses respectives de ces deux visées et, par soustraction, il en déduit la distance séparant les cadres Cₙ et Cₙ₊₁ et servant de fenêtre de mesure à ladite sonde 23.

Ensuite, le premier opérateur fait coulisser manuellement le porte-sonde 28 et le curseur 15 le long de la tige de guidage 14, de l'un desdits cadres Cₙ ou Cₙ₊₁ à l'autre, en maintenant les patins de glissement 32 en appui contre la peau 1. La sonde 23 explore donc successivement la ligne de rivetage 7. Par suite de la différence des matières constitutives des panneaux 2 (aluminium) et des rivets 9 (titane), à chaque fois que la sonde 23 passe devant un rivet, elle émet une impulsion. Le nombre d'impulsions obtenues permet éventuellement de compter les rivets du tronçon de ligne 7 examiné.

On remarquera que, par comparaison de la distance séparant les cadres Cₙ et Cₙ₊₁ et des nombres de rivets 9, mesurés de la façon décrite ci-dessus, avec des grandeurs correspondantes emmagasinées préalablement en mémoire, le microprocesseur 36 est capable de détecter toute erreur d'identification du tronçon 4 examiné.

Par ailleurs, le premier opérateur n'a pas à s'occuper du centrage de la sonde 23 par rapport aux rivets 9. Il peut donc contrôler les images apparaissant sur l'écran du dispositif 46. Il y voit donc apparaître l'image des différents rivets du tronçon et l'image des éventuelles criques. De même, le second opérateur voit apparaître les mêmes images sur l'écran du dispositif 40. En cas d'anomalies ou d'ambiguïtés, le premier opérateur peut ramener en arrière le curseur 15 et le porte-sonde 28 en maintenant les patins 32 en appui sur la peau 1 pour examiner tout à loisir la zone correspondante.

Bien entendu, les informations donnant lieu aux images sur les écrans des dispositifs 40 et 46 sont mises en mémoire dans l'unité de stockage 41 et imprimées sur un support par l'imprimante 39.

Lorsque l'examen à effectuer sur un tronçon de jonction 4 est terminé, le premier opérateur inhibe l'action de la ventouse 17 (par action sur le levier 20) et il peut donc coulisser l'ensemble 14 à 17 vers la ventouse 18, restant solidarisée de la peau, puisqu'alors la tige 14 peut coulisser le long de son axe dans le coulisseau fixe 19. Il peut amener la ventouse libérée 17 dans la position 17₁ (voir figure 1), puis la fixer sur la peau 1 à cette position par actionnement du levier 20. Ensuite, il actionne le levier 20 de la ventouse 18 dans le sens de la désolidarisation et il peut coulisser l'ensemble 18-19, dans le même sens que précédemment pour la ventouse 17, pour amener la ventouse 18 en position 18₁. Le dispositif selon l'invention est alors prêt pour l'examen du panneau 2 adjacent à celui qui vient d'être examiné.

Ainsi, par rapprochements et écartements successifs des ventouses 17 et 18, il est possible de déplacer le dispositif le long de l'axe de la tige de guidage 14 pour examiner la totalité de la jonction 4. Bien entendu, on veille, lors de chaque déplacement du dispositif, à ce que les doigts 26 et 27 restent en appui contre le joint 11.

On remarquera que le premier opérateur peut surveiller l'examen sur son écran de contrôle 46 et, grâce à la possibilité de déplacement du porte-sonde 28, dans les deux sens, cet opérateur peut revenir en arrière afin d'examiner une zone suspecte ou dissiper une ambiguïté. Afin de ne pas enregistrer plusieurs informations pour une même abscisse le long de la tige de guidage, le microprocesseur 36 n'enregistre des informations dans sa mémoire 41 que pour un sens de déplacement du curseur 15 sur la tige 14 et efface de cette mémoire les informations déjà contenues, lorsque le curseur 15 se déplace dans le sens inverse, en correspondance avec l'amplitude dudit déplacement inverse.

Comme cela a été indiqué ci-dessus, les sondes 23 peuvent être du type à courants de Foucault.

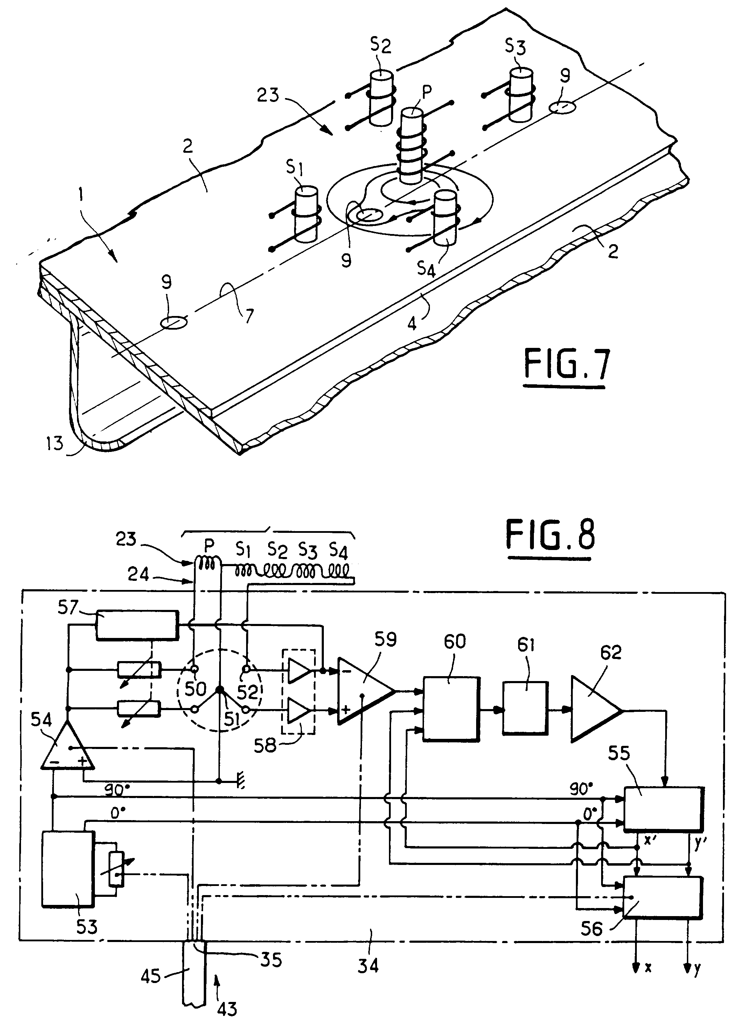

La sonde à courants de Foucault 23, dont le schéma est représenté schématiquement en perspective sur la figure 7 au-dessus des panneaux à examiner, comporte un enroulement primaire d'injection P et quatre enroulements secondaires de détection S₁ à S₄, chacun des enroulements primaire et secondaires comportant un noyau de ferrite ou analogue et ces cinq enroulements et leurs noyaux étant noyés dans un corps de matière magnétiquement et électriquement isolante (non représenté). Dans ce corps, les positions relatives des cinq enroulements sont figées, l'enroulement d'injection P étant disposé de façon centrale, alors que les enroulements de détection S₁ à S₄ sont diamétralement opposés deux à deux, les enroulements S₁et S₃ déterminant un premier axe orthogonal à un second axe déterminé par les enroulements S₂ et S₄. L'axe de l'enroulement d'injection P passe par le point d'intersection de ces premier et second axes et les enroulements S₁ à S₄ sont équidistants de ce point d'intersection.

Comme le montre la figure 8, l'enroulement d'injection P est pourvu de deux bornes 50 et 51 entre lesquelles on injecte un signal électrique d'excitation, tandis que les enroulements S₁ à S₄ sont montés en série de façon que les enroulements de détection S₁ et S₃ soient de même sens et que les enroulements S₂ et S₄ soient de sens inverse aux enroulements S₁ et S₃. Le montage en série des enroulements de détection S₁ à S₄ comporte deux bornes 51 et 52 entre lesquelles on recueille le signal de détection, c'est-à-dire un signal de déséquilibre de la sonde.

Les enroulements S₁ à S₄ sont identiques et équilibrés pour que, lorsque l'enroulement d'injection P reçoit le signal d'injection entre ses bornes 50 et 51, il engendre dans une surface homogène 2 des courants induits suivant des lignes de courants circulaires et donnant naissance dans les enroulements de détection S₁ à S₄ à des signaux égaux et deux à deux opposés, de sorte que le signal aux bornes 51 et 52 est nul. Dans l'agencement des figures 7 et 8, les enroulements S₁ et S₃ sont considérés comme des enroulements de mesure, alors que les enroulements S₂ et S₄ sont considérés comme enroulements de compensation.

Lorsque la surface au-dessus de laquelle se trouve la sonde CF n'est pas homogène, les lignes de courants induits par l'enroulement d'injection P ne sont plus circulaires et subissent des déformations au voisinage des hétérogénéités. Sur la figure 7, on a illustré la surface hétérogène de la peau d'un fuselage d'aéronef (panneau 2 en aluminium, rivets 9 en titane).

Ainsi, une sonde 23 équilibrée pour donner un signal nul entre ses bornes de sortie 51 et 52 lorsque la surface 2 est homogène ou lorsqu'elle se trouve en regard d'une partie homogène d'une surface hétérogène, fournira un signal de déséquilibre lorsque les lignes de courants induits subiront des déformations à cause d'hétérogénéités, dues par exemple aux rivets 9 ou à des criques partant des trous des panneaux 2 à travers lesquels passent lesdits rivets.

Comme le montre la figure 8, la sonde 23 est reliée au dispositif de réglage et de lecture 34, par l'intermédiaire d'une liaison 24. Le dispositif 34 comporte un générateur électrique 53 d'un signal à fréquence porteuse, de préférence sinusoïdale, et d'un signal de même fréquence, mais déphasé en arrière de 90°. On obtient ainsi un signal de référence de phase 90° destiné à servir de signal d'injection et un signal de référence de phase 0°. Le signal d'injection (phase 90°) est appliqué, d'une part, à un amplificateur 54 adapteur de courant et, d'autre part, à un double démodulateur synchrone 55 et à un déphaseur 56. Le signal de référence de phase 0° est appliqué au double démodulateur synchrone 55 et au déphaseur 56.

A la sortie de l'amplificateur 54, le signal d'injection est transmis à l'enroulement primaire P par l'intermédiaire d'un adaptateur 57.

Par ailleurs, les enroulements secondaires S₁ à S₄ sont reliés à un système adaptateur d'impédance 58 suivi d'un amplificateur de détection 59, d'un dispositif 60 d'équilibrage de la sonde 23, d'un éventuel filtre 61 destiné à éliminer les fréquences parasites de la fréquence porteuse et d'un amplificateur 62. Ainsi, le signal d'injection appliqué par le générateur 53 à l'enroulement primaire P par l'intermédiaire de l'amplificateur 54 et de l'adaptateur 57 est détecté par les enroulements S₁ à S₄, puis adapté en impédance dans l'adapteur 58, après quoi, après amplification (en 59), équilibrage (en 60), filtrage (en 61) et amplification (en 62), il est appliqué au double démodulateur 55. Celui-ci démodule la porteuse en extrayant les deux composantes x′ et y′ en quadrature de l'éventuel signal de déséquilibre qui est dû à une hétérogénéité (rivet ou crique). Enfin, les deux composantes orthogonales x′ et y′ du signal de déséquilibre, qui ont subi un déphasage dans la portion de circuit S₁ à S₄, 59 à 62, sont adressées au déphaseur 56, qui délivre à sa sortie deux composantes x et y en phase avec lesdits premier et second axes respectivement.

On sait que la profondeur de mesure d'une sonde à courants de Foucault est d'autant plus grande que la fréquence porteuse de fonctionnement est plus faible. Il est donc indispensable que le générateur 53 soit à fréquence réglable et que la mémoire 43 adresse audit générateur, par la liaison 45, des ordres spécifiques de réglage en fonction de la constitution des tronçons de jonction. De plus, à travers la liaison 45, la mémoire 43 peut ajuster de façon appropriée les gains des amplificateurs 54 et 59, et le déphaseur 56. Sur la figure 8, les différentes commandes transmises sont représentées par des lignes en tirets mixtes.

## Revendications

1. Dispositif pour l'examen non destructif d'une pluralité de tronçons de jonctions (7) rivetées ou analogues, chacun desdits tronçons (7) étant individuellement identifiable grâce à des moyens d'identification, ledit dispositif comportant :
- au moins une sonde de détection (23) électrique, déplaçable le long desdits tronçons de jonctions (7) ;
- des moyens de commande (34) du fonctionnement de ladite sonde (23) ;
- des moyens (41) d'enregistrement des résultats des examens desdits tronçons par ladite sonde ;
- des moyens à microprocesseur (36) pour la gestion des examens desdits tronçons (7) par ladite sonde (23) ; et
- des moyens de visualisation (40,46) associés auxdits moyens à microprocesseur (36),
caractérisé en ce qu'il comporte,
- une pluralité de sondes (23), différentes mais interchangeables ;
- des premiers moyens à mémoire (43) contenant, pour chaque tronçon de jonction (7), sa constitution spécifique ; et
- des seconds moyens à mémoire (43) contenant, pour chaque constitution spécifique de tronçon de jonction (7), l'information indiquant celle desdites sondes (23) qui est la plus appropriée à l'examen de cette constitution spécifique et l'information indiquant le réglage de fonctionnement à appliquer à ladite sonde (23),
- lesdits moyens à microprocesseur (36) exploitant le contenu desdits premiers et seconds moyens à memoire (43) pour afficher sur lesdits moyens de visualisation (40,46) ladite sonde la plus approprié et pour contrôler lesdits moyens de réglage (34) qui appliquent à ladite sonde (23) la plus appropriée le réglage correspondant à la constitution spécifique du tronçon de jonction en cours d'examen.

2. Dispositif selon la revendication 1,
caractérisé en ce que lesdits premiers et lesdits seconds moyens à mémoire (43) sont fusionnés en une seule mémoire (43) contenant, pour chaque tronçon de jonction (7), le réglage de fonctionnement à appliquer à ladite sonde (23).

3. Dispositif selon l'une des revendications 1 ou 2,
caractérisé en ce que le contenu desdits seconds moyens à mémoire (43) résulte d'une pluralité d'examens préalables faits avec des réglages différents de ladite sonde sur des échantillons connus de constitutions semblables à celles desdits tronçons de jonctions.

4. Dispositif selon l'une des revendications 1 à 3,
caractérisé en ce qu'il comporte, d'une part un boîtier de contrôle (21') proche de ladite sonde (23), incorporant lesdits moyens de réglage (34), ainsi que les moyens de lecture de ladite sonde et lesdits moyens à microprocesseur (36) et, d'autre part, une pluralité d'appareils périphériques, comprenant lesdits premiers et seconds moyens à mémoire et au moins une unité de mémorisation et destinés à être placés à poste fixe à quelque distance des tronçons de jonction examinés.

5. Dispositif selon l'une quelconque des revendications 1 à 4,
caractérisé en ce que ladite sonde (23) est à courants de Foucault et en ce que lesdits moyens de commande (34) contrôlent au moins la fréquence porteuse appliquée à ladite sonde en fonction de la constitution spécifique d'un tronçon à examiner.

## Patentansprüche

1. Vorrichtung zur zerstörungsfreien Prüfung einer Vielzahl von genieteten oder ähnlichen Verbindungsabschnitten (7), wobei jeder der Abschnitte (7) durch Identifizierungsmittel einzeln identifizierbar ist und die Vorrichtung umfaßt:
- mindestens eine elektrische Erfassungssonde (23), die längs der Verbindungsabschnitte (7) verschoben werden kann;
- Mittel (34) zur Steuerung des Betriebs der Sonde (23);
- Mittel (41) zur Registrierung der Ergebnisse der Prüfungen der Abschnitte durch die Sonde;
- Mikroprozessormittel (36) zur Steuerung der Prüfungen der Abschnitte (7) durch die Sonde (23) und
- Anzeigemittel (40,46), die den Mikroprozessormitteln (36) zugeordnet sind,
dadurch gekennzeichnet, daß sie umfaßt:
- eine Vielzahl von unterschiedlichen, jedoch austauschbaren Sonden (23);
- erste Speichermittel (43), die für jeden Verbindungsabschnitt (7) dessen spezifischen Aufbau enthalten, und
- zweite Speichermittel (43), die für jeden spezifischen Aufbau eines Verbindungsabschnitts (7) die Information enthalten, die angibt, welche der Sonden (23) für die Prüfung dieses spezifischen Aufbaus am besten geeignet ist, sowie die Information, die die für die Sonde (23) anzuwendende Betriebseinstellung angibt,
- die Mikroprozessormittel (36), die den Inhalt der ersten und zweiten Speichermittel (43) nutzen, um an den Anzeigemitteln (40,46) die am besten geeignete Sonde anzuzeigen und um die Einstellmittel (34) zu kontrollieren, die an die am besten geeignete Sonde (23) die dem spezifischen Aufbau des zu prüfenden Verbindungsabschnitts entsprechende Einstellung geben.

2. Vorrichtung nach Anspruch 1,
dadurch gekennzeichnet, daß die ersten und zweiten Speichermittel (43) zu einem einzigen Speicher (43) verschmolzen werden, der für jeden Verbindungsabschnitt (7) die an die Sonde (23) anzulegende Betriebseinstellung enthält.

3. Vorrichtung nach einem der Ansprüche 1 oder 2,
dadurch gekennzeichnet, daß der Inhalt der zweiten Speichermittel (43) das Ergebnis einer Vielzahl von Vorprüfungen ist, die mit unterschiedlichen Einstellungen der Sonde an bekannten Proben durchgeführt wurden, deren Aufbau dem der Verbindungsabschnitte ähnlich ist.

4. Vorrichtung nach einem der Ansprüche 1 bis 3,
dadurch gekennzeichnet, daß sie einerseits ein Steuergehäuse (21') in der Nähe der Sonde (23), in dem sich die Einstellmittel (34) sowie die Ablesemittel der Sonde und die Mikroprczessormittel (36) befinden, und andererseits eine Vielzahl von Peripheriegeräten hat, zu denen die ersten und zweiten Speichermittel und mindestens eine Speichereinheit gehören, die als stationäre Anlage abgesetzt von den geprüften Verbindungsabschnitten angeordnet sind.

5. Vorrichtung nach einem der Ansprüche 1 bis 4,
dadurch gekennzeichnet, daß die Sonde (23) eine Wirbelstromsonde ist, und dadurch, daß die Steuermittel (34) mindestens die an die Sonde entsprechend dem spezifischen Aufbau eines Prüfabschnitts angelegte Trägerfrequenz steuern.

## Claims

1. Device for the non-destructive examination of a plurality of rivetted joint portions (7) or the like, each of the said portions (7) being individually identifiable by virtue of identification means, the said device including:
- at least one electrical detection probe (23) which can move along the said joint portions (7);
- means (34) for controlling the operation of the said probe (23);
- means (41) for recording the results of the examinations of the said portions by the said probe;
- microprocessor means (36) for the management of the examinations of the said portions (7) by the said probe (23); and
- display means (40, 46) associated with the said microprocessor means (36),
characterized in that it includes:
- a plurality of different but interchangeable probes (23);
- first memory means (43) containing, for each joint portion (7), its specific construction; and
- second memory means (43) containing, for each specific construction of joint portion (7), the information indicating that one of the said probes (23) which is the most appropriate for examining this specific construction and the information indicating the operating adjustment to be applied to the said probe (23);
- the said microprocessor means (36) exploiting the content of the said first and second memory means (43) in order to display on the said display means (40, 46) the said most appropriate probe and to control the said adjustment means (34) which apply to the said most appropriate probe (23) the adjustment corresponding to the specific construction of the joint portion under examination.

2. Device according to Claim 1, characterized in that the said first and the said second memory means (43) are fused together into a single memory (43) containing, for each joint portion (7), the operating adjustment to be applied to the said probe (23).

3. Device according to either of Claims 1 and 2, characterized in that the content of the said second memory means (43) results from a plurality of prior examinations made with different adjustments of the said probe on known specimens of constructions similar to those of the said joint portions.

4. Device according to one of Claims 1 to 3, characterized in that it includes, on the one hand, a control module (21') close to the said probe (23), incorporating the said adjustment means (34), as well as the read means of the said probe and the said microprocessor means (36) and, on the other hand, a plurality of peripheral units which comprise the said first and second memory means and at least one memory storage unit and are intended to be placed at a fixed station a short distance from the joint portions examined.

5. Device according to any one of Claims 1 to 4, characterized in that the said probe (23) is an eddy-current probe and in that the said control means (34) control at least the carrier frequency applied to the said probe depending on the specific construction of a portion to be examined.
